Europäisches Patentamt

(19) European Patent Office

Office européen des brevets

(11) Publication number: **0 009 945**
**B1**

## (12) EUROPEAN PATENT SPECIFICATION

(45) Date of publication of patent specification: **19.01.83**

(51) Int. Cl.³: **B 60 P 3/025, E 04 B 1/344**

(21) Application number: **79302047.0**

(22) Date of filing: **28.09.79**

(54) Mobile refreshment equipment.

(30) Priority: **29.09.78 GB 3876678**
**05.07.79 GB 7923383**

(43) Date of publication of application:
**16.04.80 Bulletin 80/8**

(45) Publication of the grant of the patent:
**19.01.83 Bulletin 83/3**

(84) Designated Contracting States:
**DE GB**

(56) References cited:
**BE - A - 678 336**
**BE - A - 862 276**
**DE - A - 1 927 406**
**DE - A - 2 261 237**
**DE - C - 833 695**
**FR - A - 389 868**
**FR - A - 467 946**
**FR - A - 1 014 110**
**FR - A - 2 049 301**
**FR - A - 2 068 120**
**FR - A - 2 299 243**

(73) Proprietor: **Efde, Brian Albert Ernest**
**3 Beach Court**
**Whitefriars Crescent Westcliffe on Sea Essex (GB)**

(73) Proprietor: **Harrison, Peter**
**194 Ilford Lane**
**Ilford Essex (GB)**

(72) Inventor: **Efde, Brian Albert Ernest**
**3 Beach Court**
**Whitefriars Crescent Westcliffe on Sea Essex (GB)**
Inventor: **Harrison, Peter**
**194 Ilford Lane**
**Ilford Essex (GB)**

(74) Representative: **Ford, Michael Frederick et al,**
**MEWBURN ELLIS & CO. 2/3 Cursitor Street**
**London EC4A 1BQ (GB)**

(56) References cited:
**FR - A - 2 318 761**
**GB - A - 648 536**
**US - A - 3 460 297**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Mobile refreshment equipment

This invention relates to mobile equipment for the supply of food and/or drink at open air functions such as agricultural shows, racing events, open air trade exhibitions, etc.

At most large-scale outdoor events it is usual to supply some form of refreshments to persons attending and this has generally involved use of a marquee. Considerable labour is entailed in setting up a marquee and equipment within it, and because of its temporary nature such equipment frequently provides poor hygiene and poor working conditions for staff. Moreover in the United Kingdom at least, health and safety regulations lay down stringent requirements for the protection of the public, for example stipulating that all food or drink for public consumption should be stored at a height of at least 18 inches above ground level, and requiring the provision of washing facilities. With the usual temporary marquee it is difficult if not impossible to comply with these requirements.

Mobile vehicles and caravans are known which are fitted out for the provision of food and drink to customers and which are positioned at the side of a road in order to sell to passers-by. The volume of trade handled by such vehicles or caravans is much less than that which would be handled in a marquee at a large open air function. Generally such vehicles and caravans provide little or no shelter for their customers who are generally served through a relatively small hatch in the side of a vehicle. This provides not only a physical separation of the customers from the person serving them but also — because the customers feel that they are in the open air while the person serving them is not — there is a psychological separation, an impression of being in two different places. In general the customers are at ground level whereas the staff are standing on the floor within the caravan or vehicle, which further enhances the psychological separation. The standard to which such mobile vehicles is fitted is frequently not sufficient to give good hygiene and could not accommodate a larger volume of trade.

German Offenlegungsschrift 2261237 is a proposal for such a vehicle for selling light meals at the roadside, but which is fitted out to a higher standard than is frequently encountered. The customers are, as is usual, required to stand at the level of the road and are thus at a lower level than the person serving them through a hatch in the side of the vehicle. The discrepancy in height is emphasised by the fact that a surface provided for customers' use is at a lower level than the working surfaces inside the vehicle.

French specification 1014110 also proposes a vehicle fitted out to provide refreshments. This is said to be intended for such open air functions as fairs and sports meetings. However, a number of bar stools are provided along the sides of the vehicle, and these will reduce the amount of trade which can be conducted by the vehicle to a lower level than if they were not there. Moreover customers seated at these stools will still have the impression of being in the open air and outside the vehicle.

French specification 2068120 is another proposal for a vehicle for the provision of meals and drinks at the roadside. This vehicle is fitted with equipment for the preparing of food as well as means for refrigerated storage but it is not provided with means for washing up nor for the disposal of any waste water. The vehicle has a movable panel which can be arranged to extend outwardly from it to provide a floor on which customers can sit or stand. However, this floor appears to project out for only slightly more than 1 metre while customers will still not be at the same height as the person serving them from within the vehicle. These features will still give the impression that the customers are essentially in the open air and in a separate place from the person who serves them.

French specification 389 868 is an elderly document describing a railway train serving as a mobile exhibition or mobile shops. One side of a carriage opens to form both a narrow walkway for customers alongside the carriage and an awning over this walkway. Because the walkway is narrow customers standing on it will still feel to be outside the carriage. Also, as the walkway is narrow and accessible only at its end customers will not be able to circulate freely, limiting the volume of trade. There is no disclosure of selling food or drink for consumption then and there.

In contrast to the various specifications mentioned above, the present invention provides a mobile unit equipped for conducting catering or bar trade and which can be set up with an extension floor extending from it in an arrangement which enables an entirely different ambience to be created namely that both the consumers and the persons serving them are in one and the same place just as in the case of an English public house, or in a conventional bar inside a building, or for that matter in a marquee.

According to one aspect of this invention there is provided a mobile unit constructed to be moved by road, the transport wheels, if any, thereof being road wheels, the unit having a floor, side and end walls, and a roof and provided with equipment for conducting catering or bar trade, the equipment including at least a counter or other working surface and storage means for crockery, cutlery and/or glasses, the unit being openable over at least part of at least one side, and having one or more movable panels and support means therefor to support the panels adjacent that side as an extension floor to the unit, which floor provides at least part of an area for consumer's use, the upper level to which the side of the unit opens being above the eye levels of persons standing on the extension floor, characterised in that the extension floor extends out from the unit for a distance which is at least a major proportion of the height to which the unit's openable side extends above its floor level, is raised above ground and adjoins the unit at substantially the same level as the floor inside the unit, stairs or other means being provided for ascending from ground level to the consumer's area, and a safety barrier to surround the consumer's area except at the points of access thereto provided by the said stairs or other means for ascent.

The impression of a single space created by the arrangement can be enhanced by appropriate choice of decor, such as by use of surface finishes appropriate for interior use. Preferably the upper level to which the side of the unit opens is above the eye level of persons standing on the extension floor, while the consumers' area extends for at least a major proportion of the length of the unit, and for at least part of its length, has a width greater than the height of the said upper level above the floor. Preferably the unit opens from the level of the extension floor.

For washing crockery or glasses under hygienic conditions there should be provided a sink or other means for washing crockery or glasses; a water heater and fixed plumbing for the supply of clean water to the heater; and means for connecting to sewerage or a store for waste water. This equipment is desirably included as fittings in the unit, but could conceivably be provided in a separate vehicle parked adjoining the unit.

Preferably the extension floor is attached or attachable to the unit and it may be convenient for the floor support means to be a structure assemblable from a plurality of parts, some of which are attached to the unit during course of assembly. The planar element(s) which form the extension floor may be provided, at least partially, by one or more movable panels hingedly attached to the unit.

In one preferred form of the invention suitable for conducting a large volume bar trade, the planar elements to form the extension floor comprise two series of movable rectangular panels the inner edge of the first series of these panels being hingedly attached to the unit at the lower edge of the openable side thereof, the panels of the first series forming a side wall of the unit during transport thereof and providing extension floor directly adjacent the unit when the unit is opened over the said one side, the second series of rectangular panels fitting along the same side of the unit immediately inwardly of the first series of panels during transport and when the unit is opened lying alongside the outer edges of the first series of panels to provide further extension floor at the same level, the distance between the inner and outer edges of each series of panels being a major proportion of the height of the openable side wall of the unit.

In another form of the invention, both sides of the unit are openable with two series of movable rectangular panels at each side of the unit, the inner edges of the first series of panels at each side of the unit being hingedly attached to the unit at the lower edge of that side and providing extension floor directly adjacent the unit when the unit is opened over that side, the inner edges of the second series of rectangular panels at each side being hingedly attached to the unit at the upper edge of that side, forming a roof over the first series of panels when the unit is opened over that side, one of the series of panels at each side forming a side wall of the unit during transport thereof, while the other series of panels at that side is disposed inwardly thereof, the distance between the inner and outer edges of each series of panels being a major proportion of the height of the openable side walls of the unit.

In both of the above forms, it is conceivable that a single very long panel could be used in place of a series of two or more panels, but this would be unwieldy and is not preferred.

To promote attractiveness to passers-by on the ground it is desirable that they should be able to see onto the extension floor. For this it is desirable that it be no higher than 4 feet (1.2 metres) from the ground. To avoid difficult constructional arrangements, it is desirable that the floor be no lower than 70 cm from the ground.

The unit is preferably a road vehicle, such as a lorry, trailer or — preferred — a demountable semi-trailer of an articulated lorry. Alternatively the unit might be a container-like unit without wheels to be carried on a flat bed lorry. Preferably such a unit would be supported on jacks.

According to a second aspect of this invention there is provided a mobile unit having a floor, side and end walls and a roof and provided with equipment for conducting catering or bar trade the equipment including at least

a counter or other working surface;

storage means for crockery, cutlery and/or glasses;

a sink or other means for washing crockery or glasses;

a water heater;

a water inlet and/or a water storage tank;

fixed plumbing for the supply of clean water from the inlet or tank to the sink or other washing means or to the water heater; and

means for connecting to sewerage or a store for waste water;

the unit being openable over at least part of at least one side, and having one or more elements to form a floor, and support means therefore to support the elements adjacent that side as an extension floor to the unit:

two embodiments of the invention, fitted for a bar trade and wherein the unit is formed by a semi-trailer of an articulated lorry, will now be described with reference to the accompanying drawings wherein:

Figure 1 is a side view of the first unit as closed up for transport;

Figure 2 is a perspective view of the unit of Figure 1 erected for use;

Figure 3 is a plan view below roof level, showing the inside of the trailer unit and the extension floor, partially broken away to show the supporting structure beneath;

Figure 4 is a simplified section on line IV—IV of Figure 3, showing diagrammatically the lowering of the movable panels;

Figure 5 is a diagrammatic view showing the manner of assembly together of supporting parts at the end of the extension floor indicated as A in Figure 3 the parts being viewed in the direction indicated by arrow B;

Figure 6 is a detail of attachment to the unit at the corner indicated as C in Figure 3, and also showing the outer end of a support member;

Figure 7 is a detail showing further parts of the supporting structure for the extension floor;

Figure 8 is a detail of attachment of a roof support to the unit;

Figure 9 is a diagrammatic perspective view of the second unit erected for use;

Figure 10 is a diagrammatic transverse, illustrating opening the movable floor and roof panels of the second unit; and

Figure 11 is a diagrammatic view of the rear end of the second unit showing the raising of the staircase.

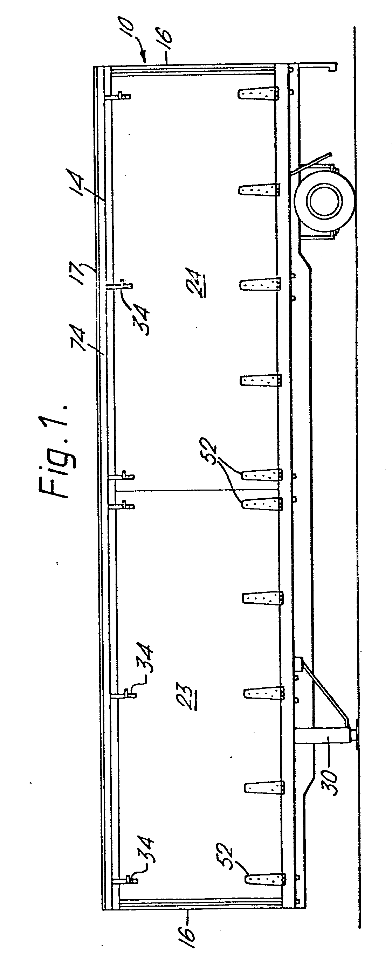

The embodiment shown in Figures 1 to 8 of the drawings comprises a forty foot (12 metre) semi-trailer 10 eight feet (2.44 metres) wide and having a floor 12, side walls 14 and 15, end walls 16 and a fixed roof 17. Struts 18 support the roof along the side wall 14, which is principally formed by movable panels 23, 24, 25, 26. When the unit is set up for conducting trade at a function, these panels are lowered onto a supporting structure to form an extension floor at the side of the unit substantially at the level of the unit's internal floor 12. and with a roof above, as will be explained in more detail below.

The semi-trailer 10 has a pair of support legs 30 at its forward end. When the unit is being set up at a function these are lowered to support the semi-trailer at a fixed height. A further pair of legs could be provided at the rear end to take the load off the semi-trailer's road wheels if desired.

The construction employed for the floor supporting structure 38 and for the roof is intended for convenient and rapid assembly. Moreover, the supporting structure for the floor is sufficiently substantial to take the weight of a very considerable number of people on the extension floor.

The supporting structure 38 consists principally of five supports 40 which extend laterally out from the side of the semi-trailer 10, uprights 42 (which also support the roof) at the outer ends of supports 40, horizontal members 44 extending between the uprights 42, and a plurality of steel tubes 46 which extend parallel to the side of the semi-trailer 10 between the supports 40.

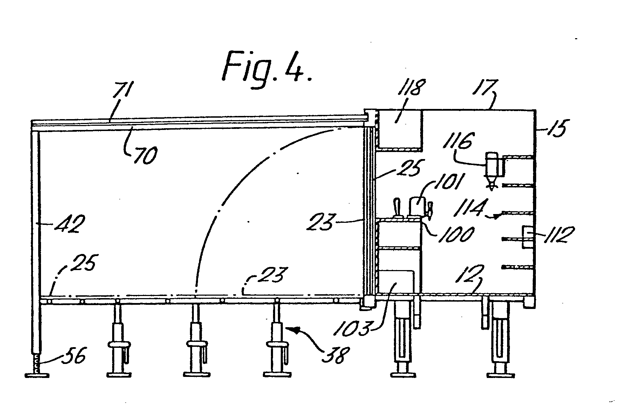

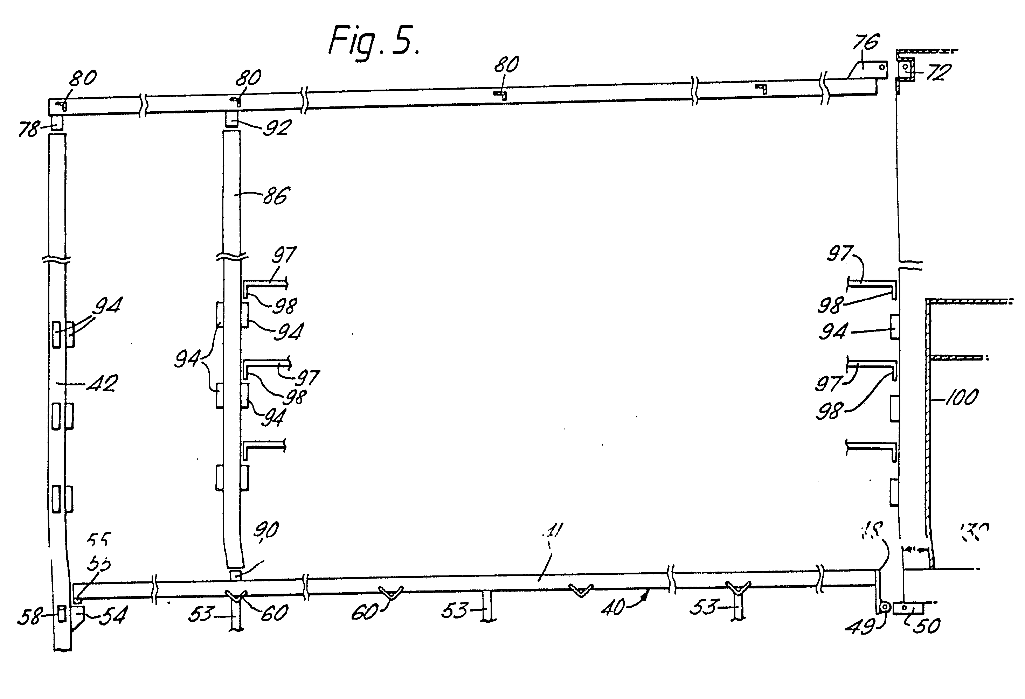

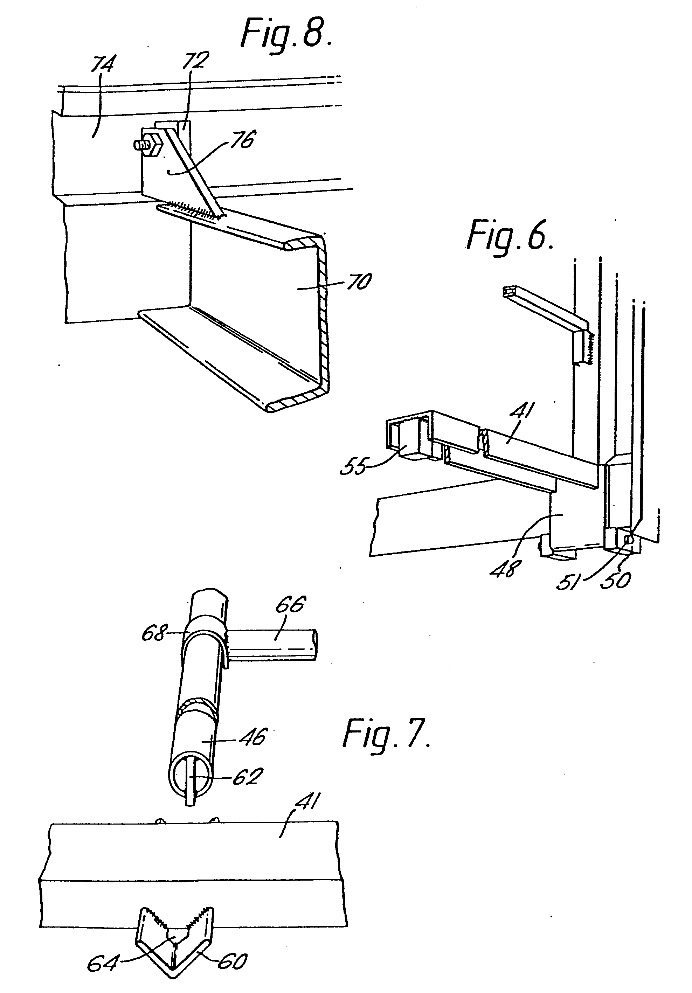

Each support 40 comprises a length of steel channel section 41 welded at its inner end to a vertical plate 48 along whose lower edge there is welded a tube 49. Pairs of lugs 50 are welded to the lower edge of the side 14 of the semi-trailer 10 and as the first step in assembling the supporting structure the supports 40 are attached to the semi-trailer by placing them in position with the tubes 49 between pairs of lugs 50 and inserting pins 51 through holes in the lugs 50 and through the tubes 49 as shown in Figure 6. As best seen from Figures 4 and 5, each support member 40 includes three screw jacks 53 welded to the channel section 41. Suitable jacks are "Acrojacks", used in the U.K. building industry.

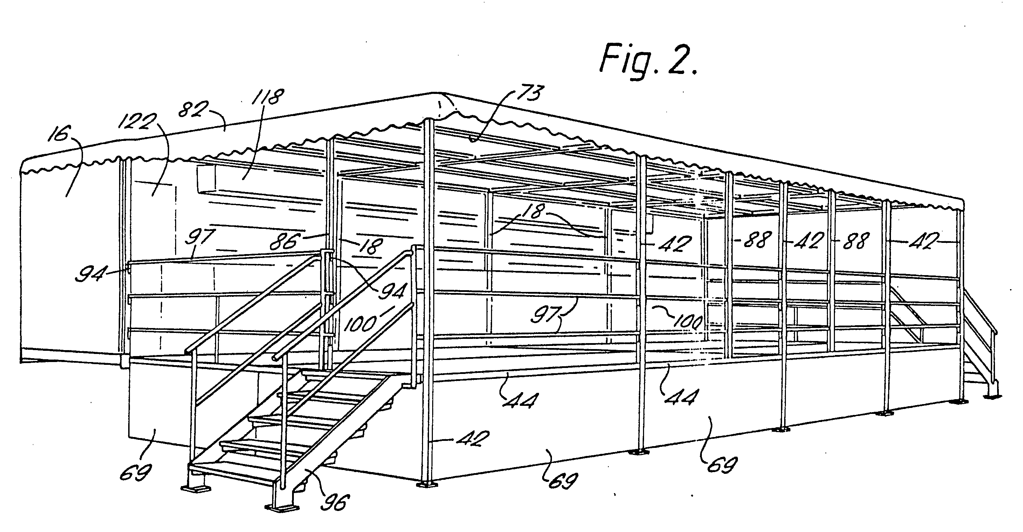

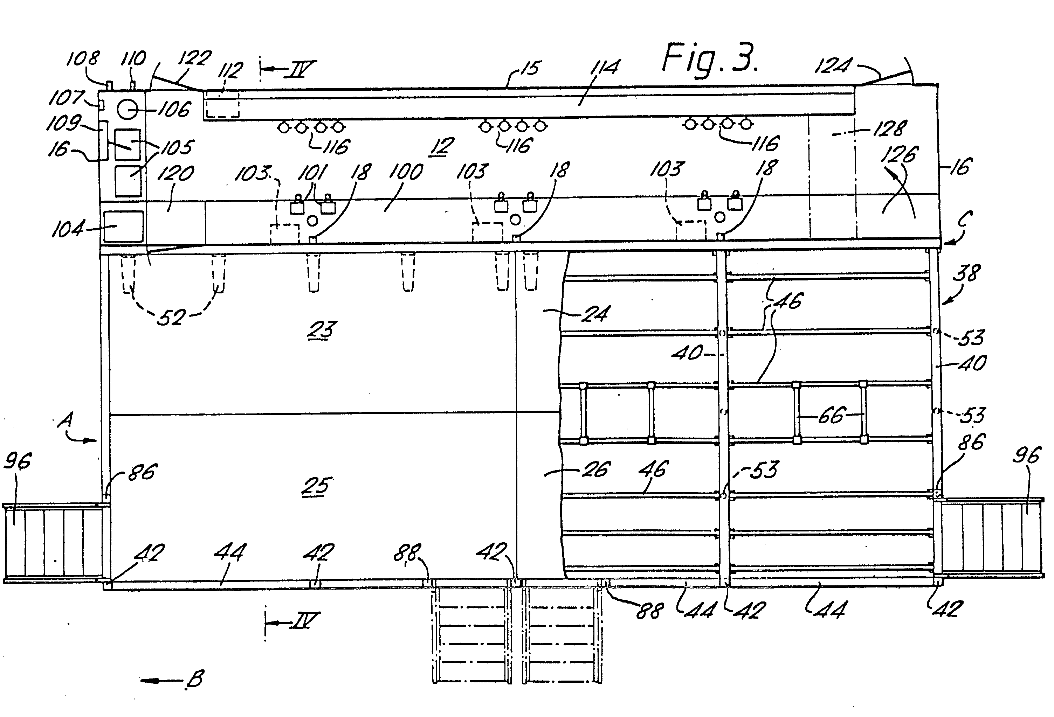

Each of the uprights 42 is formed from square steel box section and for connection to one of the members 40 has a short length of further box section 54 welded on, which receives a spigot 55 located within the downwardly facing channel of a support member 40. After the support members 40 have been attached to the semi-trailer 10 and the uprights 42, they are levelled by adjustment of the screw feet 56 of the uprights 42 and the jacks 53 are adjusted so that they also bear on the ground. The horizontal members 44 are bolted to angle brackets 58 welded to the uprights. The tubes 46 which extend between the members 40 rest in V-section brackets 60 on the support members 40, with retaining pegs 62 welded to their ends projecting into holes 64 in the brackets 60. As shown by Figures 3 and 7 further shorter steel tubes 66 are supported — by means of claws 68 at their ends — between the tubes 46 at either side of the centres of the supports 40. Fill-in panels 69 are placed around the edge of the supporting structure, as shown in Figure 2. Of the movable panels 23—26 at the side 14 of the trailer, a first pair 23 and 24 are hinged to the semi-trailer at their lower edges by means of hinges 52, five hinges for each panel. During transportation of the unit the panels 23, 24 close the side 14 of the unit and a rubber sealing strip is provided to cover the gaps at the edges of the panels. This sealing strip extends around all four edges of the panel 24 and around the edges of the panel 23 except its edge adjacent the panel 24. Latches 34 are provided for attaching the panels 23, 24 to the top part of the semi-trailer and holding them closed in transit. The second pair of panels 25, 26 are not attached to the semi-trailer and during transportation these stand free, disposed inwardly of the panels 23, 24. The closed position of the panels 23 and 25 is shown by full lines in Figure 4.

When the supporting structure 38 for the floor has been put into position, the movable panels 23—26 are lowered onto this structure to form the extension floor. First the panel 24, and then the panel 23, are hinged down to lie on the supporting structure. The panels 25, 26 are then lifted out, carried across, and laid on the supporting structure outwardly of the panels 23 and 24. The open position of the panels 23, 25 is shown in phantom in Figure 4. The outer edges of panels 23, 24 and the inner edges of panels 25, 26 are supported by the tubes 66.

When the panels 23—26 have been laid in place to form the extension floor, a roof is erected over it. This consists of corrugated steel sheets 71 supported by beams 70 extending laterally out from the semi-trailer and lengths of angle section 73 bolted to angled stube 80 on the beams 70, so as to extend between them parallel to the side of the semi-trailer 10. For attaching the beams 70 to the semi-trailer, lugs 72 are welded in a channel 74 which extends along the top edge of the side 14 of the semi-trailer. Each beam 70 has an upwardly projecting lug 76 at its inner end and this is inserted into the channel 74 and bolted to one of the lugs 72 as shown in Figure 8. The outer end of each beam 70 has a downwardly projecting spigot 78 which fits into the top of the corresponding upright 42.

The inner edges of the corrugated steel sheets are inserted into the channel 74 while the outer edges are bolted to the outermost of the angle section members 73 running parallel to the side 14 of the semi-trailer. In order to avoid any leakage of rain, especially between the semi-trailer and the steel sheets a large tarpaulin 82 is spread over both the roof 17 of the semi-trailer and the steel sheets 71 above the extension floor. The tarpaulin 82 has a decorative fringe which conceals the edges of the roof.

In addition to the uprights 42, further uprights 86, 88 are provided between the extension floor and the roof. The uprights 86 fit between upwardly facing spigots 90 on the outermost support members 40 and downwardly extending spigots 92 on the outermost beams 70. The uprights 88 are bolted to angle brackets (not shown) on the horizontal members 44 and the angle sections 73 above. Short lengths of box section 94 are welded to the uprights, and also to each end of the side 14 of the semi-trailer. Two short staircases 96 are provided for ascending from ground level to the extension floor. They may be positioned one at each end of the extension floor, as shown in Figure 2 and as shown in full lines in Figure 3, or alternatively they may be positioned in the centre of the front of the extension floor as shown in phantom in Figure 3. For this reason the distance between the uprights 86 and the corner uprights 42 is made the same as the distance between the uprights 88 and the central upright 42. The staircases stand on the ground and are connected to the extension floor by insertion of downwardly extending spigots at the upper ends of their bannister rails into box sections 94 on the uprights 86 and the corner uprights 42, or box sections 94 on the uprights 88 and the central upright 42.

A safety barrier extends around the extension floor except where the staircases 96 give access to it. This barrier is formed by rails 97 ending at downwardly extending spigots 98 which are inserted in the box sections 94 (except those to which the staircases are attached). If the stairs are at the ends of the extension floor short rails 97 are inserted between the uprights 88 and the central upright 42 (using the same box sections as are used for connecting stairs at this point) while if the stairs are in this position the same safety rails are used between the uprights 86 and the corner uprights 42.

Figure 3 shows a plan of the inside of the trailer. A bar counter 100 extends the full length of the trailer and has three sets of beer taps 101 adjacent to the struts 18 which extend from the floor 12 to the roof 17 of the trailer. Beneath the bar are electrically operated beer coolers 103 connected to the taps 101 and closable apertures in the floor 12 allow the passage of flexible piping to connect barrels of beer or lager stored beneath the trailer to the coolers 103. At the forward end there is a glass washing machine 104 as well as two sinks 105 for washing crockery, glasses, etc. and a hand washbasin 106 with a liquid soap dispenser 107 above it. There is a fixed water inlet at 108 on the exterior of the semi-trailer for connection to a piped supply. Hot water is supplied to the sinks and washbasin by a water heater 109 with a swivel spout, and connected to the inlet 108 and to the glass washing machine 104 by fixed plumbing. If no piped water supply is available, a plastic tank (stored inside the semi-trailer during transit) can be mounted on the roof 17 and connected to the fixed plumbing. The sinks, and the glass washing machine are connected to a waste water outlet 110 which can be connected by temporary piping to existing sewerage if available or else to a wastewater tank.

The water heater 109 and the coolers 103 are electric, and there are several electric lights supported from the roof 17 of the unit. An earth fault isolator and a distribution box are positioned at 112 on the wall 15 of the semi-trailer for connection to an existing mains supply or to a separately transportable generator positioned outside the semi-trailer. In either case the supply cable is brought in through a closable aperture in the floor 12. Fixed wiring connects the distribution box to the lights, the water heater 109 and sockets into which the coolers 103 and other electrical equipment can be plugged.

A bar back fitting 114 extends along the side wall 15 of the semi-trailer and this fitting has shelves for glasses and bottles, optics 116 for spirits, and space for cash registers. There are also shelves beneath the bar counter 100 for glasses and space for bottles in crates. Further storage space is provided by an overhead rack 118 above the bar counter. Electrically operated cold shelves (refrigerated trays) for cooling bottles may be placed on the back fitting.

A hinged door and lifting flap are provided in the bar counter at the position indicated by reference 120, to allow bar staff to gain access to the extension floor.

The semi-trailer 10, as mentioned, is 40 feet long (12.2 metres) and its sides extend to almost 9 feet (2.75 metres) above its floor 12. The panels 23, 24 extend for 39 feet (11.9 metres) of that length and have a height of 8 feet (2.44 metres) which is of course the distance which they extend out from the semi-trailer when laid down. The panels 25, 26 thereafter extend out for the same distance again, so that the extension floor is 16 feet (4.88 metres) wide.

There is thus provided a sufficient floor area to accommodate a substantial number of people standing on the extension floor and being served from the bar 150 would be an entirely feasible number. There is also sufficient floor area for chairs and tables to be set out, or large pieces of furniture such as benches or settees.

It will be appreciated that the side 14 of the semi-trailer is openable for substantially its full length and for most (more than 85%) of its height above the floor 12. It is openable from the level of the extension floor up to well above the eye level of persons standing on the extension floor — which is at the same level as the floor 12 within the semi-trailer.

The impression given by this unit, when erected for trade, is that the consumer's area provided by the extension floor, and the space for bar staff within the semi-trailer 10 constitute a single, partially enclosed space bounded by the side wall 15, the ends 16 of the semi-trailer, and the safety rails 97. The bar counter, psychologically, constitutes a division within this unitary space, not the boundary between two separate spaces.

This effect is accentuated by the distance for which the extension floor extends out from the semi-trailer, and also by the presence of a roof over it. The ambience created is similar to that of a bar within a building.

Because the front of the bar counter 100 and the front of the overhead rack 118 are not exposed during transit both these and the internal walls within the semi-trailer 10 can be given a decorative finish appropriate for internal conditions. For example the front of the bar counter 100 and the rack 118 can be of highly polished wood and cork tiles can be used on the inside of the wall 15 behind the back fitting 114.

The semi-trailer 10 is lower slung than is customary for freight vehicles. This enables the extension floor to be at no more than 4 feet (1.2 metres) above ground, which enables passers-by at ground level to see onto it, a factor which enhances the attractiveness to potential customers.

The unit described can be arranged to trade in different ways. For selling drinks (and possibly also snacks) to the general public at a large open air function the staircases 96 are positioned at the ends of the extension floor. There are two doors 122, 124 (which may be hinged doors as shown or upwardly rolling shutters) in the side wall 15 of the trailer. Either or both of the doors 112, 124 is open. Extra bar stock, such as crates of bottles, is stored in a standard international freight container on a lorry or trailer, and the end of this container is butted up against one of the doors 122 or 124 so that stock can be taken from the container into the semi-trailer 10. Of course, two freight containers could be used if required, one butted up against each of the doors. A further possibility would be for bar stock to be stored in a container butted against one of the two doors and a self-contained vehicle fitted for supplying food positioned so as to be accessible through the other of the two doors.

An alternative use of the unit would be to provide bar, or bar and catering, facilities for a limited number of people, for example if the unit were forming a company's stand at an open air trade exhibition or an agricultural show (when the partially enclosed space provided by the unit can give a pleasantly relaxed atmosphere for conversation) and providing hospitality for visitors to the stand. It would then be appropriate for the staircases 96 to be positioned at the centre of the front of the extension floor. The end portion 126 of the bar counter (over which the rack 118 does not extend) can be swung round from its position shown in Figure 3 to an alternative position 128 shown in phantom. It would then be possible to walk from the extension floor to the door 124. A self-contained mobile toilet unit for consumers' use could then be positioned so as to be reached through the door 124 and a vehicle fitted for supplying food positioned against the door 122. Alternatively, a food supply vehicle might be positioned against the door 124 for waiters to carry food direct to customers seated at tables on the extension floor.

For any function lasting more than one day, the panels 23, 24 could be lifted up into their closed position at the end of each day so as to prevent unauthorised access to the bar at night. If a need to close the bar rapidly is envisaged, steel mesh screens can be provided to be mounted directly in front of the bar counter.

It has already been mentioned that when the unit is transported the movable panels 23, 24 close the sidewall 14 of the semi-trailer 10. For transit the panels 25, 26 stand internally of the panels 23, 24 and as shown by Figures 4 and 5 the bar counter 100 is spaced inwardly from the edge of the semi-trailer by a distance 130 to provide space for the panels. For transport the various detachable parts forming the floor support 38 and the roof, together with the safety rails 97 and the staircases 96 may be packed inside the semi-trailer. This is preferred because it makes the unit self contained, but these items could be carried by a separate vehicle if preferred. The tarpaulin 82 can also be stored inside the semi-trailer but could be carried lashed to the semi-trailer's roof 17 if preferred. Another possibility would be for it to be lashed in a position extending over the roof 17 and down over the side walls 14, 15. It is the right size for this and would provide additional weatherproofing.

Numerous modifications are possible, both in respect of the construction described and the method of operation for business. In particular the panels 25, 26 could be hinged to the panels 23, 24, lowered with them and then hinged over to lie outwardly of them. A roof structure of lighter construction could be employed, consisting of a grid into which lightweight panels can be dropped — analogous to a suspended ceiling in a building, with a tarpaulin overall. The water heater could be powered by bottled gas rather than electricity. The extension floor could conceivably be provided entirely by parts separate from the unit, and in particular the panels or other planar elements for it could be carried by a separate vehicle although this is not preferred.

In colder weather the unit may be "winterised" by providing walls around the extension floor which extend fully from the floor to the roof above it and then providing heating within the closed area.

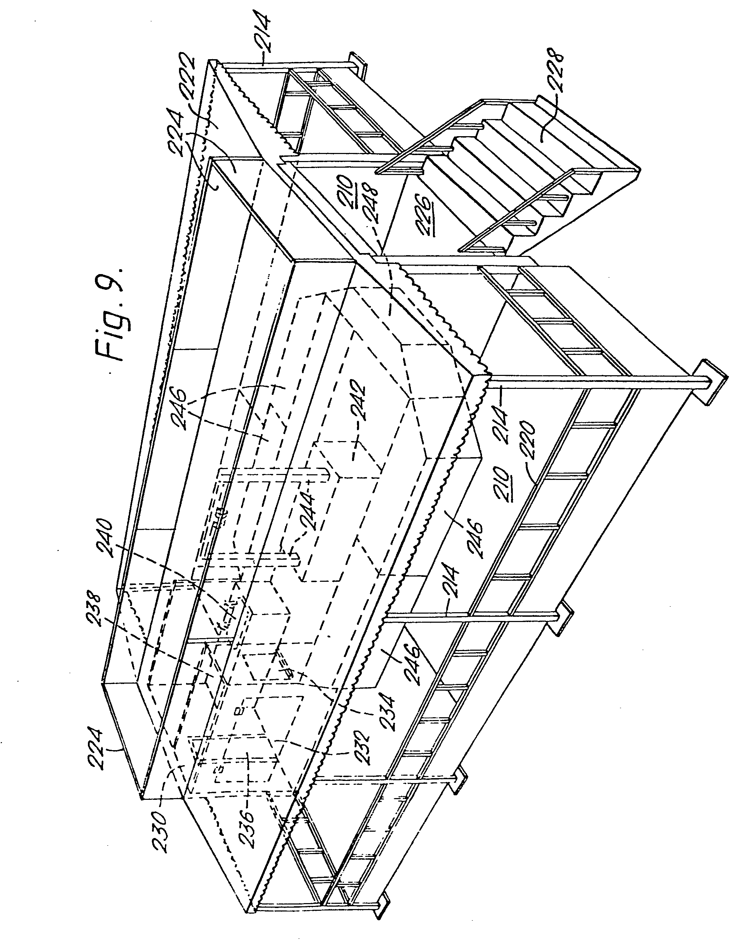

The second embodiment shown in Figures 9 to 11 also comprises a forty-foot semi-trailer which is approximately eight feet wide. However, both side walls are openable, so that an extension floor is formed at each side level with the floor of the semi-trailer. The extension floors extend for substantially the full length of the semi-trailer and extend out for eight feet (2.44 metres) at each side. They are supported on structures 208 attached to the semi-trailer. These may be constructed and attached to the semi-trailer analogously to the floor support 38 of the first embodiment, but any suitable construction of adequate strength may be employed.

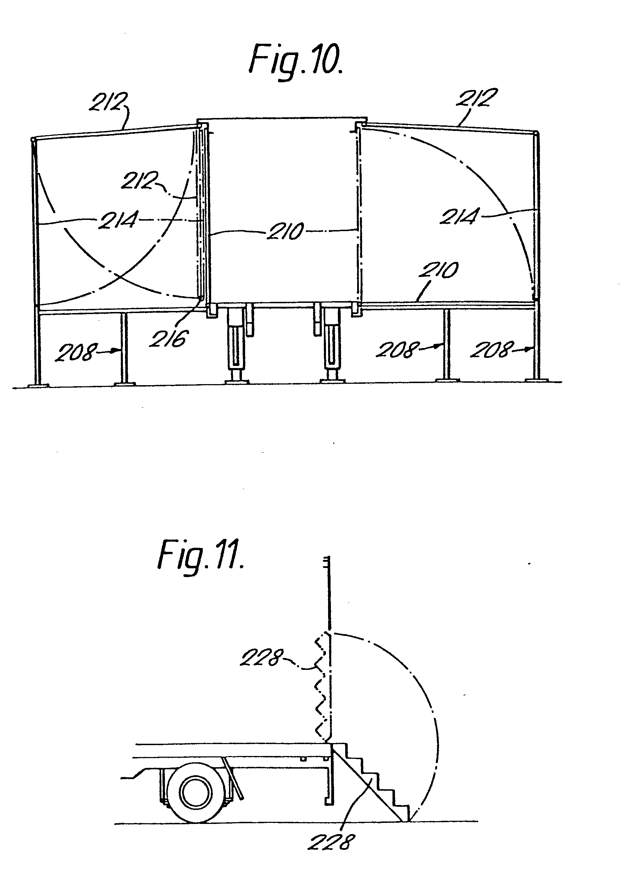

This unit has two series of movable panels at each side. A first series 210 forms extension floors, a second series 212 forms roofs over them. Figure 10 illustrates the arrangement of these panels. At the right of this figure the roof is in position and the lowering of the extension floor is indicated, at the left the raising of the roof is indicated. The panels 210 are hinged to the lower edge of the unit and the panels 212 are hinged to the upper edge. In transit the panels 212 lie (as indicated in phantom at the left of Figure 10) outwardly of the panels 210 and form a side wall of the unit. Uprights 214 to support the roofs are hinged to the outer edges 216 of the panels 212 and in transit are sandwiched between the panels 212 and 210. The panels 212 could if desired be made larger to overhang beyond the tops of the uprights 214, and consequently completely conceal the panels 210 in transit.

For erection, after the supporting structure 208 is in place the panels 212 are swung out and the uprights 214 swung down to the position shown in full lines in Figure 10. The uprights are fitted over upwardly extending spigots on the supporting structure (lifting the panels 212 slightly beyond their fully swung out positions to do this). After this the panels 210 are hinged down to lie on the supports 208 as shown in full lines at the right of Figure 10. Safety rails 220 are fitted around all three sides of the extension floors. The safety rails which extend along the sides of the extension floors (but not those at the ends) can be permanently secured to the uprights 214, so as also to be sandwiched between the panels 210, 212 during transit. A tarpaulin 222 extends over the roof of the semi-trailer and the roofs over the extension floors. Above the tarpaulin advertising boards 224 are mounted.

In this embodiment the area for consumers' use is provided by both extension floors and a rearward portion 226 of the floor within the semi-trailer. For access to the consumers' area the rear wall of the semi-trailer is openable. A short staircase 228 gives access to the consumers' area through the openable rear wall of the semi-trailer. The staircase is hinged to the lower edge of the end of the semi-trailer and for transit its hand rails are detached and it is hinged up so that its underside partially closes the end wall of the semi-trailer, as indicated in phantom in Figure 11.

Inside the semi-trailer, at its forward end, is a store room 230 for bar stock, with an access hatch 232, for supplying the bar, a larger hatch 234 for receiving extra stock (this would normally be kept closed while trading), and a personal access door 236 in the front end of the semi-trailer. Also at the front end of the semi-trailer there is a kitchen washing-up area with a working surface 238 and sink 240. Approximately in the middle of the semi-trailer there is an island fitting 242 from which pillars 244 extend up to support the roof.

The bar counter in this embodiment is not fixed: it is formed from five movable sections. For trade the sections are grouped around the island 242 but spaced from it, to form a U-shaped bar as shown in Figure 9. The bar sections 246 stand on the extension floors. For transit the bar section 248 is moved rearwardly slightly and the bar sections moved inwardly, directly against the island 242 and off the extension floors.

The somewhat diagrammatic Figure 9 does not show them, but this embodiment is provided, in suitable positions, with fittings generally similar to those provided for the first embodiment, including: an inlet for piped water, fixed plumbing, a water heater, a waste water outlet connected to the sink 240 (and to any further sinks, which may also be provided); an earth fault isolator, a distribution box, electric lighting and sockets and fixed wiring; beer coolers and taps and closeable apertures in either the floor of the semi-trailer or in the extension floors for flexible piping connecting to barrels beneath the unit. Shelves for the storage of bottles and glasses are provided beneath the bar counter sections 246, 248 and on the island fitting 242. The island fitting also carries optics for dispensing spirits.

This embodiment of the invention also gives the impression of a single, partially enclosed space. It is suited for serving a smaller number of consumers than the first embodiment, but providing a high level of service and an atmosphere particularly appropriate to limited numbers — such as when used for company stands or private parties at open air functions.

**Claims**

1. A mobile unit constructed to be moved by road, the transport wheels, if any, thereof being road wheels, the unit having a floor, side and end walls, and a roof and provided with equipment for conducting catering or bar trade, the equipment including at least a counter 100, 246, 248 or other working surface and storage means 114, 118, 242 for crockery, cutlery and/or glasses, the unit being openable over at least part of at least one side 14, and having one or more movable panels 23—26, 210 and support means 38, 208 therefor to support the panels adjacent that side as an extension floor to the unit, which floor provides at least part of an area for consumers' use, the upper level to which the side 14 of the unit opens being above the eye level of persons standing on the extension floor, characterised in that the extension floor extends out from the unit for a distance which is at least a major proportion of the height to which the unit's openable side extends above its floor level, is raised above ground and adjoins the unit at substantially the same level as the floor 12 inside the unit, stairs 69, 228 or other means being provided for ascending from ground level to the consumers' area, and a safety barrier 97, 220 to surround the consumers' area except at the points of access thereto provided by the said stairs or other means for ascent.

2. A unit according to claim 1 wherein the customer's area extends for at least a major proportion of the length of the unit, and the width of the extension floor or the sum of the widths of extension floors alongside both sides of the unit is greater than the height above the floor to which the said side of the unit opens.

3. A unit according to claim 1 or claim 2 further provided with:

a sink 105 or other means 104 for washing crockery or glasses;

a water heater 109 and fixed plumbing for the supply of clean water to the heater;

means for connecting to sewerage or a store for waste water; and

an electrical isolator 112 for the connection of an external power supply, electric lighting, and fixed wiring connecting the isolator to the lighting and to sockets for the connection of other electrical equipment.

4. A unit according to any one of the preceding claims wherein at least some of the panels 23—26, 210 which form the extension floor extend over a major proportion of the height over which the said side 14 opens, and are hingedly attached to the unit at the lower edge of the openable side 14 thereof.

5. A unit according to claim 4 characterised in that the said movable panels 23—26 comprise two series of rectangular panels each having opposite inner and outer edges, the inner edges of the first series 23, 24 of these panels being hingedly attached to the unit at the lower edge of the openable side 14 thereof, the panels 23, 24 of the first series forming a closed side wall of the unit during transport thereof, and providing extension floor directly adjacent the unit when the unit is opened over the said one side, the second series 25, 26 of rectangular panels fitting along the same side of the unit immediately inside the first series of panels during transport and when the unit is opened lying alongside the outer edges of the first series 23, 24 of panels to provide further extension floor at the same level, the distance between the inner and outer edges of each series of panels being a major proportion of the height of the openable side wall 14 of the unit above the floor thereof.

6. A unit according to claim 4 or claim 5 having a counter 100 extending along the openable side of the unit, which counter is proximate the side edge of the unit but spaced inwardly therefrom by a distance 130 sufficient to accommodate the said movable panels 23—26 adjacent but outwardly of the counter 100 during transport of the unit.

7. A unit according to claim 6 which is fitted for conducting bar trade, having a bar back fitting 114 behind the said counter which back fitting includes shelves for glasses and/or bottles, also optics 116 for dispensing spirits.

8. A unit according to any one of the preceding claims further comprising parts 70, 71, 73 to form a roof over the said extension floor adjacent the unit, the roof extending out from the unit for a distance which is at least a major proportion of the height to which the openable side of the unit extends above the floor thereof.

9. A unit according to claim 4 wherein both sides are openable with two series of rectangular panels 210, 212 at each side of the unit the panels of each series having opposite inner and outer edges, the inner edges of the first series 210 of panels at each side of the unit being hingedly attached to the unit at the lower edge of that side and providing extension floor directly adjacent the unit when the unit is opened over that side, the inner edges of the second series 212 of rectangular panels at each side being hingedly attached to the unit at the upper edge of that side, forming a roof over the first series 210 of panels when the unit is opened over that side, and forming a side wall of the unit during transport thereof, while the first series 210 of panels are disposed immediately inside the second series 212 of panels during transport, the distance between the inner and outer edges of each series of panels being a major proportion of the height of the openable side wall of the unit above the floor thereof.

10. A unit according to claim 9 having a plurality of movable bar counter sections 246, 248 which, when the sides of the unit are open can be positioned around a fixed island fitting 242 which includes shelves for glasses and/or bottles, and also optics for dispensing spirits.

**Revendications**

1. Unité mobile construite pour se déplacer sur une route, les roues de transport, s'il y en a, étant des roues routières, l'unité ayant un plancher, des parois latérales et extrêmes et un toit et étant pourvue d'un équipement pour entreprendre le commerce d'un buffet ou d'un bar, l'équipement comprenant au moins un comptoir (100, 246, 248) ou autre surface de travail et un moyen de rangement (114, 118, 242) pour de la vaisselle, des couverts et/ou des verres, l'unité pouvant être ouverte sur au moins une partie d'au moins un côté (14) et ayant un ou plusieurs panneaux mobiles (23—26, 210) et des moyens de support (38, 208), de ceux-ci pour supporter les panneaux adjacents à ce côté sous forme d'un plancher en extension à l'unité, lequel plancher forme au moins une partie d'une surface pour l'usage du consommateur, le niveau supérieur auquel le côté (14) de l'unité s'ouvre étant au-dessus du niveau des yeux des personnes se trouvant sur le plancher en extension, caractérisée en ce que le plancher en extension s'étend hors de l'unité sur une distance qui représente au moins une proportion majeure de la hauteur à laquelle le côté de l'unité pouvant s'ouvrir s'étend au-dessus du niveau de son plancher, s'élève au-dessus du sol et rejoint l'unité sensiblement au même niveau que le plancher (12) à l'intérieur de l'unité, des marches (96, 228) ou autres moyens étant prévus pour monter du niveau du sol jusqu'à la surface des consommateurs et une barrière de sécurité (97, 220) pour entourer la surface des consommateurs à l'exception des points d'accès formés par les marches ou autres moyens pour monter.

2. Unité selon la revendication 1 où la surface des consommateurs s'étend sur au moins un proportion majeure de la longueur de l'unité et la largeur du plancher en extension ou la somme des largeurs des planchers en extension le long des deux côtés de l'unité est supérieure à la hauteur au-dessus du plancher où s'ouvre ledit côté de l'unité.

3. Unité selon la revendication 1 ou la revendication 2 pourvue de plus de:
— un évier (105) ou autre moyen (104) pour laver la vaisselle ou les verres;
— un réchauffeur d'eau (109) et une plomberie fixe pour l'alimentation en eau propre vers le réchauffeur;
— un moyen pour connexion aux égouts ou à une réserve d'eau usée; et
— un isolateur électrique (112) pour la connexion d'une alimentation externe en courant, d'un éclairage électrique et de fils fixes reliant l'isolateur à l'éclairage et à des douilles pour connexion d'un autre équipement électrique.

4. Unité selon l'une des revendications précédentes où au moins une partie des panneaux (23—26, 210) formant le plancher en extension s'étendent sur une proportion majeure de la hauteur sur laquelle ledit côté (14) ouvre, et ils sont fixés articulés à l'unité au bord inférieur du côté (14) pouvant s'ouvrir.

5. Unité selon la revendication 4, caractérisée en ce que lesdits panneaux mobiles (23—26) comprennent deux séries de panneaux rectangulaires, chacun ayant des bords interne et externe opposés, les bords internes de la première série (23, 24) de ces panneaux étant fixés articulés à l'unité au bord inférieur de son côté (14) pouvant s'ouvrir, les panneaux (23, 24) de la première série formant une paroi latérale fermée de l'unité pendant son transport, et formant le plancher en extension directement adjacent à l'unité quand l'unité est ouverte sur ledit côté, la seconde série (25, 26) de panneaux rectangulaires s'adaptant le long du même côté de l'unité immédiatement à l'intérieur de la première série de panneaux pendant le transport et quand l'unité est ouverte, ils se trouvent le long des bords extérieurs de la première série (23, 24) des panneaux pour former un autre plancher en extension au même niveau, la distance entre les bords interne et externe de chaque série des panneaux étant une proportion majeure de la hauteur de la paroi latérale (14) de l'unité pouvant s'ouvrir, au-dessus de son plancher.

6. Unité selon la revendication 4 ou la revendication 5 ayant un comptoir (100) qui s'étend le long du côté pouvant être ouvert de l'unité, lequel comptoir est proche du bord latéral de l'unité mais en est espacé vers l'intérieur d'une distance (130) suffisante pour recevoir lesdits panneaux mobiles (23—26) à proximité mais vers l'extérieur du comptoir (100) pendant le transport de l'unité.

7. Unité selon la revendication 6, qui est équipée pour entreprendre le commerce du bar, ayant un équipement (114) de fond de bar derrière ledit comptoir, lequel équipement comprend des étagères pour les verres et/ou les bouteilles, et également un appareil optique (116) pour la distribution de spiritueux.

8. Unité selon l'une des revendications précédentes, comprenant de plus des pièces (70, 71, 73) pour former un toit au-dessus dudit plancher en extension à proximité de l'unité, le toit s'étendant hors de l'unité sur une distance qui est au moins une proportion majeure de la hauteur à laquelle le côté de l'unité pouvant s'ouvrir s'étend au-dessus de son plancher.

9. Unité selon la revendication 4 où les deux côtés peuvent être ouverts avec deux séries de panneaux rectangulaires (210, 212) de chaque côté de l'unité, les panneaux de chaque série ayant des bords interne et externe opposés, les bords internes de la première série des panneaux de chaque côté de l'unité étant fixés articulés à l'unité aux bords inférieurs de ce côté et formant un plancher en extension directement adjacent à l'unité quand l'unité est ouverte par ce côté, les bords internes de la seconde série (212) de panneaux rectangulaires de chaque côté étant fixés articulés à l'unité au bord supérieur de ce côté, pour former un toit au-dessus de la première série (210) de panneaux quand l'unité est ouverte au-dessus de ce côté, et former une paroi latérale de l'unité pendant son transport, tandis que la première série (210) des panneaux est disposée immédiatement à l'intérieur de la seconde série (212) des panneaux pendant le transport, la distance entre les bords interne et externe de chaque série de panneaux étant une proportion majeure de la hauteur de la paroi latérale de l'unité pouvant être ouverte au-dessus de son plancher.

10. Unité selon la revendication 9 ayant un certain nombre de sections formant comptoir de bar mobile qui, quand les côtés de l'unité sont ouverts, peuvent être placées autour d'un équipement fixe en ilot (242) qui comprend des étagères pour les verres et/ou les bouteilles et également un appareil optique pour distribuer les spiritueux.

**Patentansprüche**

1. Für den Straßentransport gebaute mobile Einheit, deren Transporträder gegebenenfalls als Straßenräder ausgebildet sind, mit einem Boden, Seiten- und Stirnwänden sowie einem Dach und mit einer zur Durchführung eines Verpflegungsoder Barbetriebs dienenden Ausrüstung, die mindestens eine Theke (100, 246, 248) oder eine andere Arbeitsfläche und eine Aufbewahrungseinrichtung (114, 118, 242) für Geschirr, Besteck und/oder Gläser aufweist, wobei die Einheit über mindestens einen Teil von mindestens einer Seite (14) geöffnet werden kann und eine oder mehrere bewegbare Platten (23 bis 26, 210) sowie eine dafür bestimmte Unterstützungseinrichtung (38, 208) aufweist, um die Platten angrenzend an diese Seite als einen erweiterten Boden der Einheit zu unterstützen, wobei dieser Boden mindestens einen Teil einer für den Konsumentengebrauch bestimmten Fläche bildet und die obere Höhe, bis zu der sich die Seite (14) der Einheit öffnet, oberhalb der Augenhöhe von auf dem erweiterten Boden stehenden Personen liegt, dadurch gekennzeichnet, daß sich der erweiterte Boden aus der Einheit heraus über einen Abstand erstreckt, der mindestens einen Hauptteil der Höhe beträgt, bis zu der sich die zu öffnende Seite der Einheit über ihrer Bodenhöhe erstreckt und über dem Erdboden erhöht ist sowie im wesentlichen in derselben Höhe an die Einheit angefügt ist wie der Fußboden (12) innerhalb der Einheit, daß Treppen (96, 228) oder andere Einrichtungen für einen Aufstieg von Erdbondenhöhe zum Konsumentenbereich vorgesehen sind und ein Sicherheitsgeländer (97, 220), um den Konsumentenbereich mit Ausnahme seiner Zugangspunkte, die durch die Treppen oder anderen Zustiegseinrichtungen gebildet sind, zu umgeben.

2. Einheit nach Anspruch 1, bei der sich der Konsumentenbereich über mindestens einen Hauptteil der Länge der Einheit erstreckt und die Breite des erweiterten Bodens oder die Summe der Breiten von längs beiden Seiten der Einheit erstreckten erweiterten Böden größer ist als die Höhe über dem Boden, zu dem sich die Seite der Einheit öffnet.

3. Einheit nach Anspruch 1 oder 2, weiter gekennzeichnet durch:
eine Spüle (105) oder eine andere Einrichtung (104) zum Waschen von Geschirr oder Gläsern,
einen Wassererhitzer (109) und eine feste Verrohrung zur Beschickung des Erhitzers mit Reinwasser,
eine Einrichtung zum Anschluß an eine Kanalisation oder einen Speicher für Abwasser, und
einen elektrischen Trennschalter (112) für die Verbindung einer externen Stromversorgung, einer elektrischen Beleuchtung und einer Festverdrahtung, die den Trennschalter mit der Beleuchtung und Steckern für den Alschluß weiterer elektrischer Einrichtungen verbindet.

4. Einheit nach einem der vorhergehenden Ansprüche, bei der wenigstens einige der den erweiterten Boden bildenden Platten (23 bis 26, 210) sich über einen Hauptteil der Höhe erstrecken, über die sich die Seite (14) öffnet und an der Einheit aufklappbar am unteren Rand ihrer zum Öffnen bestimmten Seite (14) befestigt sind.

5. Einheit nach Anspruch 4, dadurch gekennzeichnet, daß die bewegbaren Platten (23 bis 26) zwei Reihen von rechteckigen Platten aufweisen, deren jede eine gegenüberliegende innere und äußere Kante aufweist, wobei die inneren Kanten der ersten Reihe (23, 24) dieser Platten klappbar an der Einheit an der unteren Kante ihrer zum Öffnen bestimmten Seite (14) befestigt sind, die Platten (23, 24) der ersten Reihe eine geschlossene Seitenwand der Einheit während ihres Transportes bilden und den erweiterten Boden unmittelbar angrenzend an die Einheit bilden, wenn die Einheit über diese eine Seite geöffnet ist, die zweite Reihe (25, 26) von rechteckigen Platten während des Transports längs derselben Seite der Einheit unmittelbar innerhalb der ersten Reihe von Platten eingelegt ist und bei geöffneter Einheit längs der äußeren Kanten der ersten Reihe (23, 24) von Platten liegt, um einen zusätzlichen erweiterten Boden auf derselben Höhe zu bilden, und der Abstand zwischen den inneren und äußeren Kanten jeder Reihe von Platten einen Hauptteil der Höhe der zum Öffnen bestimmten Seitenwand (14) der Einheit über deren Boden beträgt.

6. Einheit nach Anspruch 4 oder Anspruch 5 mit einer sich längs der zum Öffnen bestimmten Seite der Einheit erstreckenden Theke (100), die nahe der Seitenkante der Einheit und davon nach innen in einem ausreichenden Abstand (130) beabstandet angeordnet ist, um die bewegbaren Platten (23 bis 26) während des Transports der Einheit angrenzend an die Theke (100), jedoch außerhalb derselben, unterzubringen.

7. Einheit nach Anspruch 6, die für die Durchführung eines Barbetriebs ausgestattet ist, mit einer hinter der Theke vorgesehenen Bar-Hinterausstattung (114), die Regale für Gläser und/ oder Flaschen aufweist sowie Sichtspender (116) für Spirituosen.

8. Einheit nach einem der vorhergehenden Ansprüche, die ferner Teile (70, 71, 73) zur Bildung eines Daches über dem an die Einheit angrenzenden erweiterten Boden aufweist, wobei sich das Dach von der Einheit aus über eine Entfernung erstreckt, die mindestens einen Hauptteil der Höhe beträgt, über die sich die zum Öffnen bestimmte Seite der Einheit über deren Boden erstreckt.

9. Einheit nach Anspruch 4, bei der beide Seiten mit zwei Reihen von rechteckigen Platten (210, 212) beidseits der Einheit geöffnet werden können, wobei die Platten jeder Reihe gegenüberliegende innere und äußere Kanten aufweisen, die inneren Kanten der ersten Reihe (210) von Platten beidseits der Einheit aufklappbar an der Einheit an der Unterkante dieser Seite befestigt sind und den erweiterten Boden unmittelbar angrenzend an die Einheit bilden, wenn die Einheit über diese Seite geöffnet ist, die inneren Kanten der zweiten Reihe (112) von rechteckigen Platten beidseits aufklappbar an der Einheit an der oberen Kante dieser Seite befestigt sind und ein Dach über der ersten Reihe (210) von Platten bilden, wenn die Einheit über diese Seite geöffnet ist und eine Seitenwand der Einheit während ihres Transportes bilden, während die erste Reihe (210) von Platten während des Transports unmittelbar innerhalb der zweiten Reihe (212) von Platten angeordnet ist und der Abstand zwischen den inneren und äußeren Kanten jeder Reihe von Platten einen Hauptteil der Höhe der zum Öffnen bestimmten Seitenwand der Einheit über deren Boden beträgt.

10. Einheit nach Anspruch 9 mit einer Anzahl bewegbarer Barthekenabschnitten (246, 248), die, wenn die Seiten der Einheit geöffnet sind, rund um einen festen Inselaufbau (242) in Stellung gebracht werden können, der Regale für Gläser und/oder Flaschen aufweist sowie Sichtspender für Spirituosen.

Fig.1.

Fig. 2.

Fig.3.

Fig. 4.

Fig. 5.

# Fig.8.

74   72

76

70

# Fig.6.

41

55

48   51   50

66

68

46

62

# Fig.7.

41

64   60

Fig. 9.

0009 945

## Fig.10.

## Fig.11.